# EUROPEAN PATENT APPLICATION

(11) **EP 4 424 723 A1**
(43) Date of publication of application: **04.09.2024**
(21) Application number: 23159253.6
(22) Date of filing: 28.02.2023
(51) Int. Cl.: C08F 10/06, C08F 6/00, C08F 2/34

(54) **POLYPROPYLENE PRODUCTION USING A PROPYLENE STREAM COMPRISING PROPANE**

(71) Applicant: Lummus Novolen Technology GmbH, 68165 Mannheim (DE)
(72) Inventor: Bangerth, Stefan, Mannheim (DE)
(74) Representative: Osha BWB

(57) **Abstract**

Embodiments disclosed herein relate to the production of polypropylene. A propylene stream (17) comprising propane is fed to a gas-phase polymerization zone (2). Propylene is reacted in the polymerization zone (2) to produce a polymerization product (21). A recycle gas stream (9) from the polymerization zone (2) is fed to a heat exchanger (7) to remove heat of the polymerization reaction, forming a first cooled gas stream (4). The first cooled gas stream (4) is recycled to the polymerization zone (2), and a second cooled gas stream (24) from the heat exchanger (7) is fed to a first separation system (10), forming a propane rich stream (12) and a second propylene stream (13). The second propylene stream (13) is fed to the polymerization zone (2).

## Description

### TECHNICAL FIELD

The present disclosure relates to a process and a system for the production of polypropylene from a propylene stream comprising propane, such as, for example, at least about 0.5 wt% propane, based on the total weight of the propylene stream.

### BACKGROUND ART

Processes for the production of polypropylene conventionally involve adding propylene, a polypropylene forming catalyst, and other optional compounds, to a polymerization reactor and producing a polypropylene product. The product emerging from the reactor contains various contaminants, including unreacted propylene, that generally have to be removed in order to obtain an acceptable polymer.

These processes conventionally involve high purity propylene as feedstock, commonly referred to as polymer grade propylene, which comprises propylene and propane as main diluent. In the present disclosure, a "polymer grade" is intended to designate a propylene feed having a purity of at least about 99.5 wt% based on the total weight of the propylene feed.

An example of use of high purity propylene as feedstock to a polypropylene reaction process is described in US 6 271 319 B1. According to this document, the presence of propane may be a problem in polypropylene reaction systems, and the removal of propane is particularly difficult. Thus, US 6 271 319 B1 describes a method of removing propane from propylene in a reactor vent stream using a gas separation membrane. Additional references disclosing the use of membranes for removing propane from propylene streams are US 6 963 018 B2, US 9 120 882 B2, and US 2006/0266213 A1.

The difficulty in removing propane from propylene streams lies in similar volatilities and boiling points thereof. Thus, specific, extensive separation equipment may be needed, such as distillation columns requiring a high number of theoretical trays and high reflux ratios, to obtain a polymer grade propylene. Alternative separation equipment may include membrane systems, which, while promising lower energy consumption, are largely unproven on an industrial scale. Thus, prior art separation equipment may be large and/or unsuitable or unreliable for industrial production, and may also be expensive and substantially increase the cost of polymer grade propylene.

It may, therefore, be beneficial to use lesser grade propylene feedstock that would be effective in the manufacture of polypropylene. It may also be beneficial to recover unreacted contaminants such as propylene from the polymer product.

An "intermediate grade" propylene stream, which in the present disclosure is intended to designate a stream containing less than 99.5 wt% propylene, for example less than 99 wt% propylene, based on the total weight of the stream, can also be used as feedstock. Although an intermediate grade stream includes a higher quantity of propane than conventional polymer grade propylene streams, it may nevertheless provide a high quality polypropylene product. An example of a process for making polypropylene, comprising contacting an oxygenate stream with an olefin forming catalyst to form an olefin stream and separating an intermediate grade propylene stream from the olefin stream, with the intermediate grade propylene stream containing less than 99.5 wt % propylene based on the total weight of the stream, is disclosed in EP 1 723 183 A1.

In other examples, a "chemical grade" propylene stream, which in the present disclosure is intended to designate a stream containing less than 95 wt% propylene based on the total weight of the stream, may be used as feedstock. For example, WO 2022/129063 A1 describes the use of a membrane gas separator to separate olefins and paraffins downstream of a polymerization reactor. This document describes the production of polyolefins from non-polymer grade olefin monomers, and in particular a chemical grade olefin of about 92 to 96% purity.

Be the feedstock made of an intermediate grade propylene stream or of a chemical grade propylene stream, a conventional propane removal approach is to fractionate the intermediate grade or chemical grade feedstock in order to remove propane before feeding the feedstock with polymer grade purity to a polymerization zone. However, as discussed above, this fractionation arrangement may require distillation columns including a large number of trays and consuming an excessive amount of energy.

Moreover, in a typical polymerization process, the raw effluent from the polymerization reactor may be transferred continuously to a flash tank, from which a stream of raw polymer is withdrawn for further purification. A stream of overhead gases, containing unreacted monomer, is also withdrawn from the flash tank and is recirculated to the reactor or sent to a recovery unit. Thus, the propylene feed to the reactor may be a combination of fresh propylene, propylene recirculated in the reactor/flash process loop or recovered propylene. Even when the proportion of propane introduced into a reactor loop with a fresh feed of polymer grade propylene is small, the amount circulating builds up quickly, reducing the catalyst activity and reactor productivity. The propane build-up and steady-state propane concentration in the reactor are substantially defined by the amount of reactor gases withdrawn from the polymerization section, the rate of recirculation of withdrawn gases and whether withdrawn gases undergo purification before recirculation to the polymerization zone. Propane build-up is usually controlled to a steady-state propane content in the recirculation loop in the range about 2-30%.

The amount of gases entrained in the polymer product varies depending on the polymerization process, for example on the polymerization reactor operating conditions and the arrangement of product withdrawal. The composition in the reactor gas phase will vary accordingly. However, a minimum amount of gas will always be entrained in the polymer product. The use of lower purity propylene requires a higher amount of purge from the polymerization reactor to restrict the build-up of propane in the reactor gases.

Recovery of the propylene from a vent stream is costly in terms of both capital cost and energy consumption. Hence, polymerization processes generally try to reduce the amount of gas vented from the polymerization reactor. In turn, the amount of propane fed with the feed stream needs to be restricted as well.

Accordingly, within the context of processes and systems for the production of polypropylene, there is a need of limiting energy consumption without increasing the size of the system while obtaining a polymer of high quality.

### SUMMARY OF THE DISCLOSURE

Embodiments disclosed herein provide a process and a system for the production of polypropylene from a propylene stream comprising propane as diluent or main diluent, such as, for example, comprising at least about 0.5 wt% propane or more, based on the total weight of the propylene stream. Propane may be purged from a polymerization zone where propylene is reacted to produce a polymerization product. According to one or more embodiments, the process is a gas-phase process.

Among others, embodiments disclosed herein may result in a reduction of energy consumption of propane removal, and in a reduction of the size of a separation system used for separating propane from propylene. For example, when the separation system comprises a propylene fractionator, the height and/or diameter thereof may be reduced when compared to conventional processes and systems.

Additionally, embodiments disclosed herein may enable enhanced and easy recovering of unreacted contaminants, including propylene, from the polymerization product.

In one aspect, embodiments herein relate to a process for the production of polypropylene comprising: feeding a first propylene stream comprising propane to a gas-phase polymerization zone, wherein propylene is reacted to produce a polymerization product and a carrier gas is optionally recovered; feeding a recycle gas stream from the polymerization zone to a heat exchanger to remove heat of the polymerization reaction, forming a first cooled gas stream and an optional gas vapor stream; recycling the first cooled gas stream to the polymerization zone; feeding a second cooled gas stream from the heat exchanger to a first separation system, forming a propane rich stream and a second propylene stream; and feeding the second propylene stream to the polymerization zone.

In a further aspect, embodiments disclosed herein relate to a system for the production of polypropylene comprising: a gas-phase polymerization zone configured to convert a first propylene stream comprising propane to polypropylene and produce a polymerization product; a recycle gas cool loop including a heat exchanger configured to remove heat of the polymerization reaction by means of a recycle gas stream from the polymerization zone, forming a first cooled gas stream recycled to the polymerization zone and an optional gas vapor stream; a first separation system configured to separate a second cooled gas stream from the heat exchanger and form a propane rich stream and a second propylene stream; and a flow line for feeding the second propylene stream to the polymerization zone.

By arranging the first separation system in a polymerization zone recycle gas cool loop downstream of the heat exchanger with reference to the direction of the recycle gas stream recovered from the polymerization zone, an improved separation is obtained while not impairing the simplicity and the size of the system.

Other aspects and advantages will be apparent from the following description and the appended claims, that define further embodiments of the process and the system.

### BRIEF DESCRIPTION OF DRAWINGS

Figure 1 illustrates a simplified diagram of a system for the production of polypropylene according to one or more embodiments.
Figure 2 shows energy consumption of a propylene fractionator of a system for the production of polypropylene according to one or more embodiments for different concentrations of propane in the feed to the propylene fractionator.

### DETAILED DESCRIPTION OF EMBODIMENTS

In one aspect, embodiments herein relate to a process for the production of polypropylene comprising: feeding a first propylene stream comprising propane to a gas-phase polymerization zone, wherein propylene is reacted to produce a polymerization product and a carrier gas is optionally recovered; feeding a recycle gas stream from the polymerization zone to a heat exchanger to remove heat of the polymerization reaction, forming a first cooled gas stream and an optional gas vapor stream; recycling the first cooled gas stream to the polymerization zone; feeding a second cooled gas stream from the heat exchanger to a first separation system, forming a propane rich stream and a second propylene stream; and feeding the second propylene stream to the polymerization zone.

According to one or more embodiments, the process for the production of polypropylene comprises: feeding a first propylene stream comprising propane to a gas-phase polymerization zone, wherein propylene is reacted to produce a polymerization product and a carrier gas is optionally recovered; feeding a recycle gas stream from the polymerization zone to a heat exchanger, such as a condenser, to at least partially condense the recycle gas stream, forming a first gas condensate stream and a gas vapor stream; recycling the first gas condensate stream to the polymerization zone; feeding a second gas condensate stream from the heat exchanger to a first separation system, forming a propane rich stream and a second propylene stream; and feeding the second propylene stream to the polymerization zone.

In another aspect, embodiments disclosed herein relate to a system for the production of polypropylene comprising: a gas-phase polymerization zone configured to convert a first propylene stream comprising propane to polypropylene and produce a polymerization product; a recycle gas cool loop including a heat exchanger to remove heat of the polymerization reaction by means of a recycle gas stream from the polymerization zone, forming a first cooled gas stream recycled to the polymerization zone and an optional gas vapor stream; a first separation system configured to separate a second cooled gas stream from the heat exchanger and form a propane rich stream and a second propylene stream; and a flow line for feeding the second propylene stream to the polymerization zone.

According to one or more embodiments, the system for the production of polypropylene comprises: a gas-phase polymerization zone configured to convert a first propylene stream comprising propane to polypropylene and produce a polymerization product; a recycle gas cool loop including a heat exchanger, such as a condenser, to remove heat of the polymerization reaction by means of a recycle gas stream from the polymerization zone, forming a first gas condensate stream recycled to the polymerization zone and a gas vapor stream; a first separation system configured to separate a second gas condensate stream from the heat exchanger and form a propane rich stream and a second propylene stream; and a flow line for feeding the second propylene stream to the polymerization zone.

In the following, embodiments applicable both to the process and the system are described.

According to one or more embodiments, the first propylene stream comprising propane fed to the polymerization zone comprises at least about 0.5 wt% propane, such as for example from 0.5 wt% to 20 wt% propane, from 1 wt% to 15 wt% propane, from 2 wt% to 12.5 wt% propane, and from 3 wt% to 10 wt% propane, based on the total weight of the stream.

According to one or more embodiments, the second propylene stream fed to the polymerization zone comprises at least about 0.5 wt% propane, such as for example from 0.5 wt% to 20 wt% propane, from 1 wt% to 15 wt% propane, from 2.5 wt% to 12.5 wt% propane, and from 5 wt% to 10 wt% propane, based on the total weight of the stream.

According to one or more embodiments, each of the first and the second propylene stream may comprise or consist of an intermediate grade propylene stream or a chemical grade propylene stream.

According to one or more embodiments, the process may further comprise feeding any catalyst suitable for the polymerization of propylene, such as, for example, any catalyst selected from the group comprising Ziegler-Natta catalysts and single site catalysts, such as metallocene catalysts.

According to one or more embodiments, the catalyst may comprise a Ziegler-Natta catalyst. Ziegler-Natta catalysts comprise magnesium/titanium/electron donor complexes, optionally supported on a suitable support, for example including silica or MgClz, used in conjunction with an organo-aluminum cocatalyst and an external selectivity control agent, such as for example an aromatic carboxylic acid ester or an alkoxy silane compound. Suitable Ziegler-Natta catalyst may include titanium-based catalysts, such as the catalyst described in US 4 376 062 A, US 4 379 758 A, US 5 066 737 A and US 9 522 968 B2.

According to one or more embodiments, the catalyst may comprise a metallocene catalyst. A metallocene catalyst comprises organometallic coordination complexes of one or more ligands in association with a metal atom. Examples of suitable metallocene catalysts are described, for example, in US 7 169 864 B2.

According to one or more embodiments, the process may further comprise feeding additional optional compounds to the polymerization zone. The additional optional compounds may comprise, for example, one or more comonomers, such as ethylene and/or butene, to produce respective copolymers or terpolymers of propylene, and/or hydrogen to control the molecular weight of the polymerization product, and/or inert compounds, such as, for example, nitrogen or argon, that may be used for other purposes, such as to control pressure and monomer concentration, and/or polymerization additives, such as, for example, a static control agent or an activity limiting agent (e.g., ATMER 163).

According to one or more embodiments, depending on the required capacity and polymerization product range, the polymerization zone may comprise at least one reactor or more reactors. For example, the at least one reactor may comprise a gas-phase stirred bed reactor, such as for example a vertical gas-phase stirred bed reactor.

According to one or more embodiments, the polymerization zone comprises at least two reactors, for example of any of the types indicated above. According to one or more embodiments, two reactors may be arranged in series or in parallel. For example, two reactors may be arranged in series to produce propylene impact copolymer. For example two reactors may be arranged in parallel to achieve higher capacities and to produce bimodal resins. If the polymerization zone comprises more than one reactor, each reactor may comprise a corresponding recycle gas cool loop including a heat exchanger to remove heat of the polymerization therefrom. For example, the heat exchanger may comprise a condenser.

According to one or more embodiments, the process further comprises discharging the polymerization product, for example in form of polymer powder, from the polymerization zone (e.g., from the reactor(s) as defined in any one of the embodiments indicated above) and separating the polymerization product from the carrier gas and any unreacted contaminants in a polymer separation system. According to one or more embodiments, the polymer separation system comprises a polymer separator to separate the polymer from a depressurized propylene. The polymer separator may operate, for example, at a pressure ranging from 1 bar to 7 bar, such as for example from 1 bar to 4 bar, or from 2 bar to 4 bar.

According to one or more embodiments, the polymer may be further degassed, for example in a purge silo by flushing with nitrogen or argon or other flushing gas in countercurrent. According to one or more embodiments, the purge offgas may be sent to a purge gas recovery system. According to one or more embodiments, the powder may be then converted into pellets that may incorporate well-dispersed additives.

According to one or more embodiments, the second cooled gas stream may have a temperature from about 5°C to about 50°C, such as for example from about 15°C to about 45°C, and for example from about 20°C to about u40°C.

According to one or more embodiments, the propane rich stream may contain, in addition to a predominating amount of propane, also propylene. According to one or more embodiments, the propane rich stream may contain, in addition to the predominating amount of propane, also propylene and butene and minor amounts of butane (such as less than 1% v/v butane). According to one or more embodiments, the propane rich stream may contain at least 50% v/v propane and less than 50% v/v propylene, such as for example from 40 % v/v, 30 % v/v, 20 % v/v, 10 % v/v or 5 % v/v to less than 50% v/v propylene.

According to one or more embodiments, the carrier gas may comprise propylene and propane and one or more additional gas, that may include any one of nitrogen, argon, ethane, ethylene, butene, butane and hydrogen. According to one or more embodiments, the one or more additional gas may be fed to the polymerization zone during the polymerization process, for example as comonomer, or as a fluidization gas or as a purge gas, or to remove light hydrocarbons from the polymerization product.

According to one or more embodiments, the carrier gas may be recycled to the polymerization zone. According to one or more embodiments, the carrier gas may be sent to a recovery system to separate propylene and then the propylene may be recycled to the polymerization zone. According to one or more embodiments, the carrier gas may be sent to an external recovery system or user.

According to one or more embodiments, the heat exchanger comprises a condenser. In this(these) embodiment(s), the recycle gas stream may be at least partially condensed, so that a gas condensate stream and a gas vapor stream are formed. According to one or more embodiments, the gas vapor stream may be fed to the polymerization zone or to the gas condensate stream recycled to the polymerization zone. According to one or more embodiments, the condenser may comprise a shell-and-tube heat exchanger, such as for example a vertical shell-and-tube heat exchanger.

According to one or more embodiments, the second gas condensate stream fed to the first separation system can be taken from a liquified recycle gas of a single reactor and/or any liquified recycle gas of a cascade reactor system or of a parallel reactor system.

According to one or more embodiments, the first separation system where propane is separated from propylene may comprise a propylene fractionator. According to one or more embodiments, the first separation system where propane is separated from propylene may comprise a distillation column. According to one or more embodiments, the first separation system may comprise any one of a low pressure fractionator, a medium pressure fractionator or a high pressure fractionator or any combination thereof. According to one or more embodiments, the low pressure fractionator, which may operate at a pressure from about 2 barg to 10 barg, such as for example from about 3 barg to about 6 barg, may be cooled by a refrigerant, such as for example propylene. According to one or more embodiments, the medium pressure fractionator, which may operate at a pressure from about 8 barg to about 22 barg, such as for example from 10 barg to about 18 barg, may be operated by a heat pump. According to one or more embodiments, the high pressure fractionator, which may operate at a pressure from about 14 barg to about 30 barg, such as for example at about 23 barg, may be cooled by cooling water, and may be heated by steam or hot water or a hot process fluid.

According to one or more embodiments, the first separation system may comprise a fractionator including a reflux drum from which a vent stream may be removed for more efficient operation of the fractionator, and an optional external recovery unit. According to one or more embodiments, the vent stream may be sent to the external recovery unit or back to the polymerization zone. According to one or more embodiments, the medium pressure fractionator may comprise a heat pump including a compressor a discharge pressure of which may be selected in a predetermined range. In this way, the flow rate of the vent stream may be minimized and/or recycle of the vent stream to the polymerization zone may be facilitated. For example, the discharge pressure may be selected such that the vent stream from the reflux drum is directed to a suction side of the compressor in the gas vapor stream.

According to one or more embodiments, the separation in the first separation system may be carried out at a temperature in the range of from about -20°C to about 70°C, such as from about 10°C to about 60°C, for example from about 35°C to about 50°C.

According to one or more embodiments, the process may further comprise feeding a propylene feedstock comprising propane to a second separation system, forming the first propylene stream and a light hydrocarbon stream, which may comprise ethane. According to one or more embodiments, the light hydrocarbon stream may further comprise, in addition to ethane, one or more of methane, propylene, propane, hydrogen, nitrogen, ethylene, methane, oxygen, CO, CO₂, acetylene.

According to one or more embodiments, the propylene feedstock fed to the second separation system comprises at least 0.5 wt% propane, such as for example from 0.5 wt% to 20 wt%, from 1 wt% to 15 wt% from 2 wt% to 12.5 wt%, or about to 10 wt% propane, based on the total weight of the feedstock.

According to one or more embodiments, the second separation system where the light hydrocarbon stream is separated from propylene may comprise, for example, a stripper or a deethanizer, the deetanizer comprising for example a vent column for recovery of ethylene from an overhead product of the deetanizer, forming the propylene stream that is fed to the polymerization zone. In this(these) embodiment(s), the propylene stream is thus a purified propylene stream.

According to one or more embodiments, the process may further comprise filtering any incompletely formed polymers from a product stream from the polymerization zone. According to one or more embodiments, the process may further comprise feeding any unreacted components that may be found in the product stream from the polymerization zone to the second separation system. According to one or more embodiments, the process may further comprise compressing such unreacted components before feeding them to the second separation system. In a corresponding manner, the system according to one or more embodiments may comprise a compressor to compress such unreacted components, the compressor being arranged in a line for feeding the unreacted components to the second separation system. According to one or more embodiments, the unreacted components may comprise unreacted propylene, propane, unreacted comonomers, hydrogen, solvents, and other components used in the process.

According to one or more embodiments, the process may further comprise feeding a portion of the unreacted components, which may be previously compressed, to the heat exchanger.

According to one or more embodiments, the process may further comprise feeding the gas vapor stream to the polymerization zone.

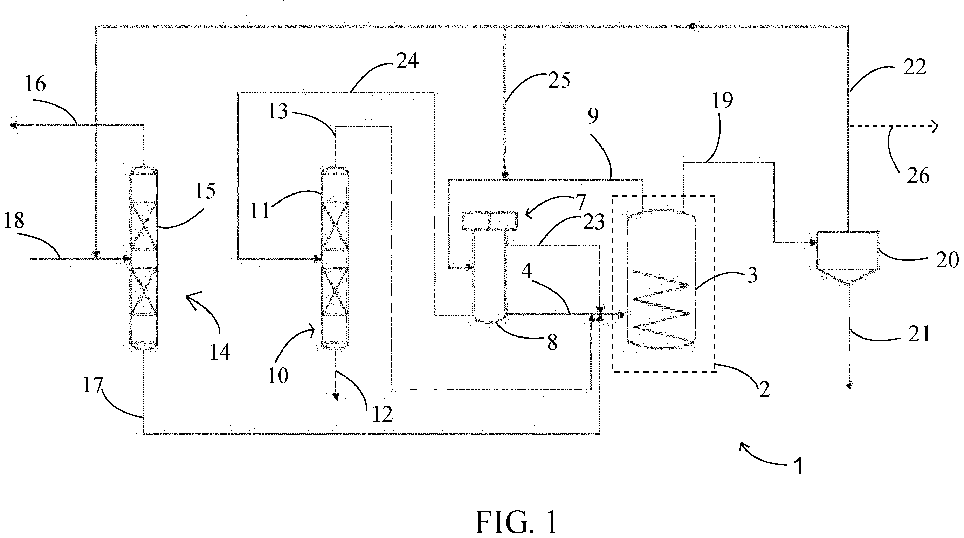

Referring now to Figure 1, a system for the production of polypropylene according to one or more embodiments is generally designated by reference number 1.

In the embodiment shown in this figure, the system 1 for the production of polypropylene comprises a first separation system 10, a second separation system 14, a gas-phase polymerization zone 2, a recycle gas cool loop including a heat exchanger 7, and a polymer separation system 20.

The polymerization zone 2 may comprise a gas reactor, such as a vertical gas-phase stirred bed reactor 3. Although Figure 1 shows this type of reactor, other types of reactors may be used according to one or more embodiments. Suitable reactors may include any gas phase reactors suitable for the polymerization of propylene, either batchwise, semi-continuously, or continuously, such as fluidized bed reactors or horizontal or vertical stirred powder bed reactors. Moreover, although Figure 1 shows only one reactor, the polymerization zone 2 may comprise, in one or more embodiments, more than one reactor, such as for example at least two reactors arranged in series or in parallel.

The gas-phase stirred bed reactor 3 converts a first propylene stream 17 comprising propane to polypropylene. The first propylene stream 17 may be fed to the gas-phase stirred bed reactor 3 by a corresponding line, which in the embodiment shown in Figure 1 is in fluid communication with the second separation system 14. However, the system could attain, among others, energy saving, structural simplification and size reduction also without the presence of the second separation system 14, which is optional, according to the present disclosure. Indeed, these technical effects are attained by removing propane from the polymerization zone 2, as described in more detail in the following.

The first propylene stream 17 may comprise at least about 0.5 wt% propane, such as for example from 0.5 wt% to 20 wt% propane, from 1 wt% to 15 wt% propane, from 2 wt% to 12.5 wt% propane, from 3 wt% to 10 wt% propane, based on the total weight of the stream.

Additional components (not shown) may be fed to the polymerization zone 2. Any catalyst suitable for the polymerization of propylene may be fed to the polymerization zone 2, such as, for example, a Ziegler-Natta catalyst. Additional components may include hydrogen, for example to control the molecular weight of the polymerization product, and/or optional comonomer(s), such as ethylene and/or butene, and/or an organo-aluminum cocatalyst and/or an external selectivity control agent, such as for example an aromatic carboxylic acid ester or an alkoxy silane compound.

The gas-phase stirred bed reactor 3 produces a polymerization product 21. The polymerization product 21 may be a homopolymer or a copolymer, depending on whether comonomers are fed to the gas-phase stirred bed reactor 3.

In general, the polymerization may be carried out at a temperature in the range of from about 40°C to about 150°C, for example from about 60°C to about 90°C and/or at a pressure in the range of from about 10 bar to 50 bar, for example from about 20 bar to about 35 bar.

In a cascade reactor configuration, a second polymerization zone downstream of the gas-phase stirred bed reactor 3 may be operated at a pressure ranging from about 10 bar to about 30 bar and/or at a temperature ranging from about 30°C to about 90°C.

The reaction time may depend on the selected reaction conditions. According to one or more embodiments, the reaction time may be from about 0.2 hours to about 5 hours, for example from about 0.5 hours to about 2 hours.

In the embodiment shown, a product stream 19 leaves the gas-phase stirred bed reactor 3. The product stream 19 may contain, in addition to the polymerization product 21, various components 22, including unreacted propylene, propane, unreacted comonomers, hydrogen, incompletely formed polymers, and any other components used in the process. These components may be removed from the polymerization product 21 by using the polymer separation system 20.

According to one or more embodiments, the polymer separation system 20 may include any one of a centrifuge, a cyclone separator, a flashing separator, a cooling separator, a distillation separator, an absorption separator, or combinations thereof. The separation system used may depend on the type of polymerization reactor as well as the feed components. Figure 1 shows a polymer separation system 20 from which the polymerization product 21 (e.g. polypropylene) is recovered, whereas the components 22 removed from polypropylene may be recycled to the second separation system 14. However, according to one or more embodiments, instead of recycling the components 22 to the second separation system 14, these components may be withdrawn by a stream 26.

In this manner, according to one or more embodiments, light gases, such as for example nitrogen, may be removed from the polymerization zone. In case of transition between different polymerization products, ethylene and hydrogen may be removed from the polymerization zone, shortening the transition time between the different polymerization product. In case of a cascade reactor system wherein ethylene only or predominantly ethylene is fed to the second reactor, ethylene may be removed from the carrier gas such that recovered propylene without ethylene contamination can be fed to the first reactor. Additionally or alternatively, a portion 25 of the components 22 may be recycled to the heat exchanger 7. In this manner, monomer is refed to the polymerization zone without occurring additional processing costs.

Among the benefits of the process and the system of the present disclosure, the propane concentration in the polymerization zone may be controlled independently of the amount of direct recycle since propane may be purged independently of the recycle loop.

In line with the present disclosure, a recycle gas stream 9 is withdrawn from the polymerization zone 2 to be at least cooled or partially or fully condensed in the heat exchanger 7, which is arranged downstream of the gas-phase stirred bed reactor 3 with reference to the direction of the recycle gas stream 9.

According to one or more embodiments, the heat exchanger 7 of the recycle gas cool loop comprises a condenser 8 configured to at least partially condense the recycle gas or fully condense the recycle gas. In the embodiment shown in Figure 1, a first gas condensate stream 4 and a gas vapor stream 23 are formed. The first gas condensate stream 4 and the gas vapor stream 23 are recycled to the gas-phase stirred bed reactor 3, thus closing the recycle gas cool loop. Optionally, as shown in said figure, the gas vapor stream 23 may be introduced in the first gas condensate stream 4. In this way, a more uniform gas composition of the reactor feed is obtained.

The system 1 further comprises the first separation system 10. The first separation system 10 is configured to separate a second condensate gas stream 24 from the heat exchanger 7 and form a propane rich stream 12 as bottom product and a second propylene stream 13 as overhead product. The first separation system 10 is thus arranged downstream of the heat exchanger 7, with respect to the direction of the second condensate gas stream 24. For example, when more than about 90% of the recycle gas condenses, a recycle gas flow rate may be about 6 to about 9 times the amount of polypropylene produced. However, according to one or more embodiments, the heat may be nevertheless removed without necessarily reaching 90% condensation, provided that a sufficient flow rate in the recycle gas cool loop is reached. In any case, arranging the first separation system 10 in the recycle cool loop allows to increase flow rate significantly.

The separation in the first separation system 10 may take place in a low pressure separation column, which may for example be operated at a temperature in the range of -20°C to 25°C and/or at a pressure in the range of 2 barg to 10 barg, for example from 3 barg to 8 barg.

The first separation system 10 may for example comprise a distillation column 11 that produces distillate product rich in propylene, e.g., a propylene fractionator. According to one or more embodiments, the distillation column may include trays. For example, the propylene fractionator may operate via a heat pump, not shown in the drawing, at a pressure from 8 barg to 22 barg, such as for example from 10 barg to 18 barg.

The propane stream 12 recovered by the first separation system 10 may also include heavier components, such as, for example, butane and butene. The second propylene stream 13 is fed back to the polymerization zone 2.

According to one or more embodiments, the system 1 further comprises the second separation system 14. The second separation system 14 is configured to separate a propylene feedstock 18 comprising propane and form the first propylene stream 17 as bottom product, and a light hydrocarbon stream 16, which may contain C1-C2 hydrocarbons and/or other impurities, as overhead product. The presence of separation system 14 may be beneficial, for example, when light impurities are present in the propylene feedstock 18 or when light gases are vented from the stream 22 before recirculating C3s and C4s to the polymerization zone 2.

The propylene feedstock 18 may comprise or consist of an intermediate grade propylene stream or a chemical grade propylene stream. For example, the propylene feedstock 18 may comprise at least about 0.5 wt% propane, such as for example 3 wt% to 10 wt% propane, based on the total weight of the feedstock.

The light hydrocarbon stream 16 may comprise ethane and other light components, such as ethylene, methane, acetylene, nitrogen, hydrogen, oxygen and any incompletely separated propylene and propane.

The separation in the second separation system 14 may take place in a high pressure separation column, which may be operated at a temperature in the range of - 20°C to 80°C and/or at a pressure in the range of 30 barg to 40 barg, for example at about 35 barg.

The second separation system 14 may comprise a distillation column 15 that produces an overhead product rich in methane, ethane, ethylene, e.g., a deethanizer. According to one or more embodiments, the distillation column 15 may include trays. For example, the deethanizer may operate at a pressure from 10 barg to 40 barg, such as for example at about 35 bar g.

According to one or more embodiments, the propane concentration in the polymerization zone 2 is from 2 wt% to 30 wt% with respect to the total weight of the polymerization zone gas. According to one or more embodiments, the propane concentration in the first propylene stream 17 fed to the polymerization zone 2 comprises from 0.5 wt% to 20 wt% propane with respect to the total weight of the polymerization zone gas. Since the propane concentration in the polymerization zone 2 is higher than in the feed to the polymerization zone 2, separating propane and propylene is enhanced and more convenient.

According to one or more embodiments, the first propylene stream 17 may also be fed downstream of withdrawal of stream 24 from the heat exchanger 7.

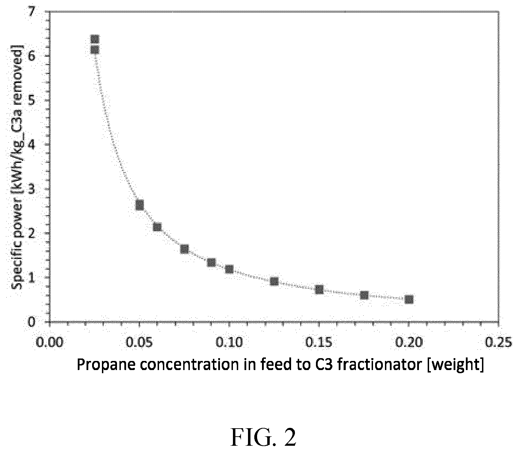

Figure 2 shows energy consumption of a propylene fractionator of a system for the production of polypropylene according to one or more embodiments for different concentrations of propane in the feed to the propylene fractionator. In particular, the results refer to a heat pump propylene fractionator and are generated with flowsheet simulations using Aspen Plus simulation software. The propylene content in the propylene fractionator bottom is set to 5 wt% in all cases. The feed flow rate is set such that the same amount of propane is purged while recycle rate is minimized to reduce energy consumption. The results show that energy consumption per unit of purged propane reduces by more than 50 % when increasing the propane content in the feed to the propylene fractionator from 5 wt% to 10 wt%.

As described above, embodiments herein provide a process and a system for the production of polypropylene that may advantageously reduce energy requirements of propane removal, and thus also overall energy requirements of the process and system. Additionally, the system may have a reduced size. Additionally, the process and system may produce a high quality polymerization product, substantially indistinguishable from polymerization products produced using a polymer grade propylene feedstock, and this despite the presence of propane in the propylene feedstock.

While the disclosure includes a limited number of embodiments, those skilled in the art, having benefit of this disclosure, will appreciate that other embodiments may be devised which do not depart from the scope of the present disclosure. Accordingly, the scope should be limited only by the attached claims.

## Claims

1. A process for producing polypropylene comprising:
feeding a first propylene stream (17) comprising propane to a gas-phase polymerization zone (2), wherein propylene is reacted to produce a polymerization product (21) and a carrier gas is recovered;
feeding a recycle gas stream (9) from the gas-phase polymerization zone (2) to a heat exchanger (7) to remove heat of the polymerization reaction, forming a first cooled gas stream (4) and an optional gas vapor stream (23);
recycling the first cooled gas stream (4) to the polymerization zone (2);
feeding a second cooled gas stream (24) from the heat exchanger (7) to a first separation system (10), forming a propane rich stream (12) and a second propylene stream (13); and
feeding the second propylene stream (13) to the polymerization zone (2).

2. The process of claim 1, wherein the first propylene stream (17) comprises at least 0.5 wt% propane based on total weight of the first propylene stream (17).

3. The process of claim 1 or claim 2, wherein the second propylene stream (13) comprises at least 0.5 wt% propane based on total weight of the stream of the second propylene stream (13).

4. The process of any one of claims 1-3, wherein the carrier gas comprises propylene, propane and one or more of nitrogen, ethane, ethylene, butane, butene and hydrogen.

5. The process of any one of claims 1-4, wherein the heat exchanger (7) comprises a vertical shell-and-tube condenser (8).

6. The process of any one of claims 1-5, wherein the first separation system (10) comprises a distillation column (11).

7. The process of any one of claims 1-6, further comprising feeding a propylene feedstock (18) comprising propane to a second separation system (14), forming the first propylene stream (17) and a hydrocarbon stream (16) comprising C1-C2 hydrocarbons.

8. The process of claim 7, wherein the propylene feedstock (18) comprises at least 0.5 wt% propane based on total weight of the propylene feedstock (18).

9. The process of claim 7 or claim 8, further comprising feeding any unreacted components in a product stream (19) from the gas-phase polymerization zone (2) to the second separation system (14) and, optionally, feeding a portion (25) of the unreacted components to the heat exchanger (7).

10. The process of any one of claims 1-9, further comprising feeding the gas vapor stream (23) to the gas-phase polymerization zone (2).

11. A system for producing polypropylene comprising:
a gas-phase polymerization zone (2) configured to convert a first propylene stream (17) comprising propane to polypropylene and produce a polymerization product (21);
a recycle gas cool loop including a heat exchanger (7) configured to remove heat of the polymerization reaction by means of a recycle gas stream (9) from the gas-phase polymerization zone (2), forming a first cooled gas stream (4) recycled to the gas-phase polymerization zone (2) and an optional gas vapor stream (23);
a first separation system (10) configured to separate a second cooled gas stream (24) from the heat exchanger (7) and form a propane rich stream (12) and a second propylene stream (13); and
a flow line for feeding the second propylene stream (13) to the gas-phase polymerization zone (2).

12. The system of claim 11, wherein the gas-phase polymerization zone (2) comprises at least one gas-phase stirred bed reactor (3).

13. The system of claim 11 or claim 12, wherein the heat exchanger (7) comprises a vertical shell-and-tube condenser (8).

14. The system of any one of claims 11-13, wherein the first separation system (10) comprises any one of a low pressure fractionator, a medium pressure fractionator (11) or a high pressure fractionator.

15. The system of any one of claims 11-14, further comprising a second separation system (14) configured to separate a propylene feedstock (18) comprising propane and form the first propylene stream (17) and a light hydrocarbon stream (16) comprising C1-C2 hydrocarbons.

16. The system of claim 15, further comprising a polymer separation system (20) for removing unreacted components from the polymerization product (21).

17. The system of claim 16, further comprising a flow line for feeding the unreacted components to the second separation system (14).
